# EUROPÄISCHE PATENTSCHRIFT

(11) **EP 0 781 969 B1**
(45) Veröffentlichungstag und Bekanntmachung des Hinweises auf die Patenterteilung: **23.04.2003**
(21) Anmeldenummer: 96118682.2
(22) Anmeldetag: 21.11.1996
(51) Int. Cl.: F24D 11/00, F04C 13/00

(54) **Solaranlage mit Zahnradpumpe**
Solar system with gear pump
Installation solaire avec pompe à engrenage

(30) Priorität: 22.11.1995 DE 19543533
(43) Veröffentlichungstag der Anmeldung: 02.07.1997
(73) Patentinhaber: SOLVIS Solarsysteme GmbH, 38122 Braunschweig (DE)
(72) Erfinder: Krause, Thomas Dipl.Ing., 38302 Wolfenbüttel (DE); Terschüren, Klaus-Henning Dipl.Ing., 38173 Evessen (DE); Wunderlich, Erhard Dr.Ing., 78333 Stockach (DE)
(74) Vertreter: Einsel, Martin, Dipl.-Phys.

(56) Entgegenhaltungen:
- EP-A- 0 003 293
- DE-A- 4 102 162
- US-A- 4 324 227
- US-A- 4 470 776
- PATENT ABSTRACTS OF JAPAN vol. 15, no. 39 (M-1075), 30.Januar 1991 & JP 02 277983 A (NIKKISO CO LTD), 14.November 1990,
- PATENT ABSTRACTS OF JAPAN vol. 13, no. 469 (M-883), 24.Oktober 1989 & JP 01 182585 A (KOMATSU LTD), 20.Juli 1989,
- ABTEILUNG WERBUNG & MESSEN DER VEB KOMBINAT PUMPEN & VERDICHTER: "TECHNICHES HANDBUCH PUMPEN" 1987 , VEB VERLAG TECHNIK , BERLIN XP002043340 * Seite 223 - Seite 233; Abbildung 5.2.15 *

## Beschreibung

Die Erfindung betrifft eine Solaranlage mit einem Solarkreislauf eines Wärmeträgermediums, einem Solarkollektor eingebunden in diesem Solarkreislauf, einem Wärmetauscher im Solarkreislauf und einer Zirkulationspumpe im Solarkreislauf, die als Zahnradpumpe ausgebildet ist. Sie betrifft außerdem eine Zahnradpumpe, insbesondere für Solaranlagen zur Zirkulation eines Wärmeträgermediums, mit einem Pumpengehäuse, in dem zwei Zahnräder ineinandergreifend drehbar gelagert sind, und einem Pumpengehäusedeckel.

Bei Solaranlagen wird die auf einen Kollektor strahlende Sonnenstrahlung in Wärmeenergie umgewandelt und an ein Wärmeträgermedium abgegeben. Das Wärmeträgermedium wird über einen Solarkreislauf mittels einer Zirkulationspumpe einem Wärmetauscher zugeführt, der die Wärme an einen Heizungs- oder Trinkwasserspeicher abgibt. Zu den Solaranlagen gehören verschiedene Armaturen, wie z. B. Sicherheitsventil, Ausdehnungsgefäß, Entlüfter, Schwerkraftbremse u.s.w., die für einen sicheren und störungsfreien Betrieb der Anlage sorgen. Generell können dabei zwei Anlagetypen unterschieden werden. Sogenannte "High-Flow-Systeme" arbeiten mit relativ hohen Volumenströmen von ca. 35 bis 40 l/hm² Kollektorfläche im Solarkreislauf. Bei bekannten Solaranlagen zur Warmwasserbereitung wird der Solarkreislauf üblicherweise mit verfügbaren Heizungsumwälzpumpen ausgerüstet. Die bekannten Heizungsumwälzpumpen sind Schaufel- oder Zentrifugalpumpen, die mit Spaltrohrmotoren in einem Druckbereich von 200 hPa bis 800 hPa (entsprechend 0,2 bis 0,8 bar oder 2 bis 8 Meter Förderhöhe) betrieben werden. Die Pumpen arbeiten mit relativ hohen Volumenströmen von bis zu 1000 l/h. Demgegenüber arbeiten sogenannte "Low-Flow-Systeme" mit relativ niedrigen Volumenströmen von ca. 10 bis 14 l/hm² Kollektorfläche im Solarkreislauf. Problematisch ist jedoch, für derartige Anlagen Pumpen mit einer Förderhöhe von wenigstens 20 m bei 10 bis 200 l/h zu finden.

Nachteilig beim Einsatz von Schaufel- oder Zentrifugalpumpen für Solaranlagen ist, dass bei stillstehender Pumpe das Wärmeträgermedium entgegen der normalen Umwälz- und Fließrichtung strömen kann, da derartige Pumpen keine Sperrwirkung erzielen. Daraus ergibt sich, dass bei im Solarkollektor auskühlender Wärmeträgerflüssigkeit diese durch Schwerkraft entgegen der Förderrichtung zirkuliert, d. h. im Kollektor auskühlt, durch die Zirkulationsleitung zum Wärmetauscher strömt, dort Wärme aus dem Speicher aufnimmt, um dann zum Kollektor zurückzufließen und dort die Wärme an die Umgebung abzugeben. Um diese unerwünschte Wärmeabgabe zu unterbinden, muss bei herkömmlichen Anlagen eine Schwerkraftbremse oder ein Rückschlagventil vorgesehen werden.

Die US-PS 4 328 873 beschreibt eine Vorrichtung zum Sammeln und Transportieren von Wärmeenergie, deren Funktionsweise auf der Verdampfungsenthalpie des Wassers beruht; die eingesetzten Solarkollektoren werden also nicht von Wasser durchströmt. In eine Wasserversorgungsleitung wird gerade soviel Wasser gepumpt, dass sich dort ein Sumpf bildet. Hierfür wird als Speisepumpe eine Konstantvolumenpumpe, z. B. eine Zahnradpumpe mit steiler Kennlinie oder eine Zentrifugalpumpe mit Regelventilen vorgeschlagen. Für Solaranlagen mit zirkulierenden Medien ist eine solche Konzeption nicht geeignet.

Aus der US-PS 4 324 227 ist eine Solaranlage mit einem Solarkollektor und einem Wärmeträgermedium bekannt. Sie zeigt eine Pumpe mit axialer Zuführung und tangentialer Abführung, also dem typischen Spiralgehäuse einer Kreiselpumpe. Diese wird für die in der US-PS 4 324 227 geforderten Volumenströme von über 20 l/min auch benötigt, da der eingesetzte Absorber mäanderförmig durchströmte Kanäle aufweist, die im Querschnitt sehr breit sind. Es handelt sich also um eine "High-Flow-Anlage".

Darüber hinaus können die aus den sogenannten "High-Flow-Anlagen" eingesetzten Pumpen aufgrund ihrer hydraulischen Eigenschaften, nämlich relativ hohe Volumenströme bei relativ geringen Arbeitsdrücken, nicht für Systeme mit niedrigen Volumenströmen und relativ hohen Drücken (größer gleich 2000 hPa entsprechend 2 bar) eingesetzt werden. Insbesondere können die aus "High-Flow-Anlagen" bekannten Zentrifugalpumpen keinen ausreichenden Druck erzeugen, um die "Low-Flow-Anlage" bei Inbetriebnahme mit Wärmeträgermedium zu befüllen. Daher ist es bekannt, bei derartigen Anlagen zur Befüllung des Systems eine weitere Pumpe als Hilfsaggregat kurzfristig anzuschließen, die die gesamte Anlage spült und den für die Druckprobe und die Befüllung notwendigen Druck erzeugt.

Aufgabe der Erfindung ist es daher, eine Solaranlage für ein "Low-Flow-System" anzugeben, bei der eine unerwünschte Rückzirkulation mit einfachen Mitteln vermieden wird und zur Befüllung der Anlage keine Hilfsaggregate benötigt werden.

Gelöst wird diese Aufgabe für eine gattungsgemäße Solaranlage dadurch, dass die Zahnradpumpe eine Förderhöhe von 10 m bis 40 m besitzt und einen Förderstrom von 10 l/h bis 200 l/h liefert.

Besonders bevorzugt ist dabei eine Zahnradpumpe, die eine flache Pumpenkennlinie hat.

Durch Verwendung einer Zahnradpumpe als Zirkulationspumpe in der Solaranlage wird erreicht, daß bei Stillstand der Zirkulationspumpe ein Zurückfließen des Wärmeträgermediums verhindert wird, so daß der Einbau einer Schwerkraftbremse bzw. eines Rückschlagventils im Solarkreislauf überflüssig ist. Darüber hinaus kann die Zahnradpumpe problemlos die optimalen hydraulischen Bedingungen für ein "Low-Flow-System" erfüllen, da diese nach dem Verdrängerprinzip arbeitende Pumpe durch geeignete Wahl der Größe und Gestaltung des Verdrängerraumes bei gegebener Drehzahl, nämlich vorzugsweise für die Verwendung an einem Spaltrohrmotor, den gewünschten Förderstrom und Förderdruck erreicht. Der erzielte Wirkungsgrad liegt dabei deutlich über dem von ähnlich dimensionierten Strömungsmaschinen, die dennoch die geforderten hydraulischen Eigenschaften nicht erreichen. Darüber hinaus ist vorteilhaft, daß Zahnradpumpen mit den üblichen Drehzahlen von 2- oder 4-poligen Asynchronmaschinen direkt angetrieben werden können. Ein Getriebe ist nicht erforderlich.

Femer sind aus der Labortechnik und der Hydraulik Zahnradpumpen bekannt, die aufgrund eines sehr geringen Spaltabstandes eine äußerst steile Pumpenkennlinie haben. Daraus folgt, daß diese Pumpen einen annähernd festgelegten Förderstrom über einen großen Druckbereich haben. Gerade diese Eigenschaft ist jedoch für Zirkulationspumpen für Solaranlagen ungünstig, da die Anlage dann nicht gedrosselt werden kann und außerdem für jede Solaranlagengröße eine größenmäßig genau abgestimmte Pumpe eingesetzt werden müßte.

Erwünscht wäre es daher auch eine Zirkulationspumpe anzugeben, die die gewünschten hydraulischen Eigenschaften erfüllt, nämlich insbesondere einen ausreichenden Betriebsdruck erzeugt und für unterschiedliche Förderströme geeignet ist.

Eine derartige Zirkulationspumpe zeichnet sich dadurch aus, daß sie eine Zahnradpumpe ist, mit einem Pumpengehäuse, in dem zwei Zahnräder ineinandergreifend drehbar gelagert sind, und einem Pumpengehäusedeckel, sowie dadurch, daß die Pumpe eine flache Pumpenkennlinie hat.

Eine solche Zirkulationspumpe besitzt die gewünschten hydraulischen Eigenschaften, erzeugt insbesondere einen ausreichenden Betriebsdruck und ist für unterschiedliche Förderströme geeignet.

Um die Zahnradpumpe für verschiedene Anlagengrößen verwenden zu können, ist es erforderlich, daß bestimmte Förderströme für bestimmte Anlagengrößen erreicht werden. Um nicht eine Vielzahl von Pumpengrößen vorzuhalten, wird erfindungsgemäß die Pumpe mit einer relativ flachen Pumpenkennlinie ausgelegt. Die Pumpenkennlinie, die die Förderhöhe bzw. den Förderdruck über dem Förderstrom darstellt, wird also so eingestellt, daß zwei oder mehrere Anlagenkennlinien im passenden Bereich des Förderstromes geschnitten werden. Zusätzlich kann die Drehzahlregelung des Spaltrohrmotors genutzt werden, um zu weiteren kleineren Förderströmen zu gelangen, die bei kleinen Anlagen gefordert werden. Somit ist es möglich, mit einer Pumpengröße das gesamte Spektrum von Solaranlagen abzudecken. Es können daher größere Stückzahlen der Zahnradpumpe kostengünstig hergestellt werden. Ferner reduzieren sich die Lagerhaltungs- und Wartungskosten.

Dadurch, daß die Pumpe auf der Saugseite neben einem Sauganschluß einen Füllanschluß zum Befüllen der Solaranlage mit dem Wärmeträgermedium aufweist, wird das Befüllen der Solaranlage mit dem Wärmeträgermedium erheblich erleichtert. Die Zahnradpumpe ist in der Lage, die gesamte Anlage zu spülen und den für die Druckprobe und die Befüllung notwendigen Druck zu erzeugen.

Ein vorzugsweise an dem Füllanschluß am Pumpengehäuse integrierter Füllhahn vereinfacht das Befüllen des Systems mit dem Wärmeträgermedium aus einem dort angeschlossenen Vorratsbehälter. Ein auf der Saugseite im Solarkreislauf angeordneter Absperrhahn erlaubt dabei das Ansaugen aus dem angeschlossenen Vorratsbehälter.

Durch Vorsehen eines Feinfilters bzw. eines Schmutzfangs im Solarkreislauf werden Schwebpartikel und Verunreinigungen im Wärmeträgermedium ausgeschieden, um einen sicheren Betrieb der Zahnradpumpe zu gewährleisten.

Dadurch, daß das Pumpengehäuse eine mehrfach stufig abgesetzte Außenfläche hat, wird die Schallabstrahlung an der Außenfläche der Zahnradpumpe weitestgehend minimiert. Das vorzugsweise im wesentlichen zylindrisch bzw. topfförmig ausgebildete Pumpengehäuse ist dabei in Form von abgestuften Zylindermantelflächen mit unterschiedlichen Radien ausgestaltet. Die Aufgliederung der Außenfläche des Pumpengehäuses verringert vorteilhaft Resonanzerscheinungen.

Zur Verringerung der Schallemission der Zahnradpumpe ist femer vorgesehen, daß die Zahnräder schrägverzahnt sind. Der Förderstrom der Zahnradpumpe wird damit vergleichmäßigt, so daß auch hydraulische Störgeräusche vermieden werden. Die Anlage ist daher auch problemlos in Wohnhäusern ohne Geräuschbeeinträchtigung der Bewohner einsetzbar.

Zur weiteren Geräuschdämpfung ist vorgesehen, daß das Pumpengehäuse, der Pumpengehäusedeckel und/oder die Zahnräder aus Kunststoff ausgebildet sind.

Nachfolgend wird die Erfindung an einem Ausführungsbeispiel und unter Bezugnahme auf die Zeichnung detailliert beschrieben.

Darin zeigt:
- Fig. 1: ein hydraulisches Verschaltungsschema der erfindungsgemäßen Solaranlage,
- Fig. 2: eine entlang der in Fig. 3 dargestellten Linie A-B geschnittene Darstellung der an einem Spaltrohrmotor angeflanschten Zahnradpumpe,
- Fig. 3: eine Stirnansicht der Zahnradpumpe und
- Fig. 4: einen Schnitt entlang der Linie C-D der Fig. 3.

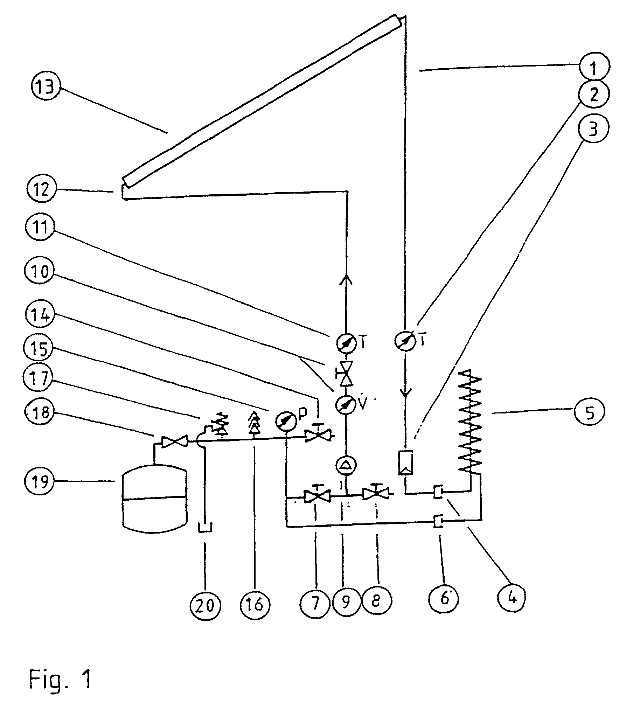

Die in Fig. 1 dargestellte Solaranlage hat einen Solarkollektor 13, der ein in dem Solarkreislauf zirkulierendes Wärmeträgermedium durch Sonnenbestrahlung erwärmt. An den Solarkollektor 13 ist ein Kollektorvorlauf 1 angeschlossen. Der Kollektorvorlauf 1 hat ein Vorlaufthermometer 2. Femer ist im Vorlauf 1 ein Schmutzfang 3 in Form eines Feinfilters angeordnet. Der Kollektorvorlauf 1 mündet über eine Anschlußverschraubung 4 in einen in einem Heizungs- oder Trinkwasserspeicher angeordneten Solarwärmetauscher 5. Der Rücklauf des Wärmetauschers 5 ist über eine Anschlußverschraubung 6 mit dem Kollektorrücklauf 12 verbunden. Der Kollektorrücklauf 12 ist mit einem Absperrkugelhahn 7 versehen und führt über eine Zirkulationspumpe 9, die als Zahnradpumpe ausgebildet ist, über einen Durchflußmesser mit Absperrventil 10 und ein Rücklaufthermometer 11 zurück zum Solarkollektor 13.

Zwischen dem Absperrkugelhahn 7 und der Zahnradpumpe 9 ist ein Füllanschluß mit Füll- und Entleerhahn 8 vorgesehen.

In Strömungsrichtung des Wärmeträgermediums vor dem Absperrkugelhahn 7 ist eine Rohrabzweigung vorgesehen, an der ein Spülhahn 14, ein Druckmesser 15 sowie ein Entlüftungsventil 16 angeordnet sind. Ferner ist ein bei einem bestimmten Überdruck auslösendes Sicherheitsventil 17 mit einem Überlauf 20 an dem Abzweigrohr vorgesehen. Am Ende des Abzweigrohres ist mittels Kupplung 18 ein Ausdehnungsgefäß 19 angeschlossen.

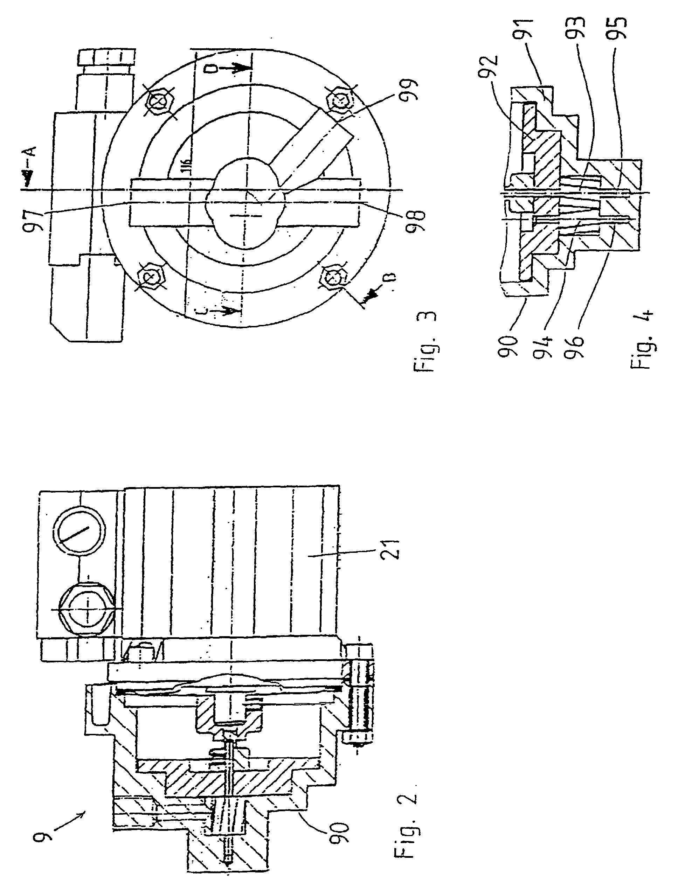

Die erfindungsgemäß ausgestaltete Zahnradpumpe 9 ist in Fig. 2 entlang der in Fig. 3 mit A-B bezeichneten Linie geschnitten dargestellt. Die Zahnradpumpe 9 weist ein Pumpengehäuse 91 auf, in dem eine Pumpenkammer ausgebildet ist, die zwei Zahnräder 93, 94 aufnimmt. Das konzentrisch angeordnete Zahnrad 93 (siehe Fig. 4) ist auf einer Antriebsachse 95 gelagert. Das Zahnrad 94 ist kämmend mit dem Zahnrad 93 frei drehbar auf einer Nebenachse 96 angeordnet. Die Zahnräder 93, 94 sind schrägverzahnt.

Die Antriebsachse 95 ist, wie in Fig. 2 dargestellt, mit der Antriebsachse eines Spaltrohrmotors 21 verbunden. Die mit den Zahnrädern 93, 94 augestattete Pumpenkammer ist mit einem Pumpendeckel 92 abgeschlossen. In die Pumpenkammer führt, wie in Fig. 3 dargestellt, ein Sauganschluß 98 sowie ein Füllanschluß 99. Auf der Druckseite der Pumpe ist ein Druckanschluß 97 vorgesehen.

Da Zahnradpumpen im allgemeinen sowohl hydraulische, wie auch mechanische Geräusche erzeugen, sind mehrere Maßnahmen zur Verringerung der Geräuschabgabe vorgesehen. Durch die Schrägverzahnung der Zahnräder 93 und 94 werden ein pulsierender Förderstrom und damit zusammenhängende hydraulische Geräusche vermieden. Darüber hinaus ist die Außenfläche 90 des Pumpengehäuses 91 stufig gegliedert ausgebildet, um die Geräuschabstrahlung über das Pumpengehäuse zu minimieren. Das im wesentlichen zylindrisch bzw. topfförmig ausgebildete Pumpengehäuse 91 ist in Form von abgestuften Zylindermantelflächen mit unterschiedlichen Radien abgestuft, so daß Resonanzerscheinungen an der Außenfläche 90 stark verringert oder gänzlich ausgeschaltet werden.

Nachfolgend wird die Arbeitsweise der Solaranlage und der Zahnradpumpe detailliert beschrieben.

Die erfindungsgemäße Solaranlage kann direkt über den Füll- und Entleerhahn 8 mit dem Wärmeträgermedium befüllt werden. Dabei wird an dem Füllhahn 8 ein Vorratstank für das Wärmeträgermedium angeschlossen. Der Absperrkugelhahn 7 an der Saugseite der Zahnradpumpe 9 im Solarkreislauf wird gesperrt und der Füllhahn 8 geöffnet. Nun kann die Zahnradpumpe 9 einen zum Druckaufbau in dem System ausreichenden Förderdruck entwickeln. Dabei sind keine zusätzlichen Hilfsaggregate zur Befüllung der Anlage erforderlich.

Bei befüllter und über Entlüftungsventil 16 ordnungsgemäß entlüfteter Anlage wird das Wärmeträgermedium mittels der Zahnradpumpe 9 im System umgewälzt. Dabei strömt das Medium entlang des Kollektorrücklaufs 12 zum Solarkollektor 13, wo die auftreffenden Sonnenstrahlen das Medium erwärmen. Das erwärmte Wärmeträgermedium wird dann über den Solarvorlauf 1 und den Feinfilter 3 dem Wärmetauscher 5 zugeführt. Der Feinfilter 3 soll Schwebpartikel aus dem Wärmeträgermedium abscheiden, um die Betriebssicherheit der Zahnradpumpe 9 zu gewährleisten.

In dem Wärmetauscher 5 wird die im Solarkollektor 13 aufgenommene Wärmeenergie von dem Wärmeträgermedium an die umgebende Flüssigkeit, vorzugsweise Wasser, in dem Heizungs- oder Trinkwasserspeicher durch Wärmeleitung abgegeben. Das Wärmeträgermedium wird dann über die Zahnradpumpe 9 wiederum dem Solarkollektor 13 zugeführt. Bei Temperaturschwankungen in den Systemen wird mittels des Ausdehnungsgefäßes 19 ein gleichmäßiger Druck aufrechterhalten.

Die Anlage wird vorzugsweise bei einem Druck von 2 bar betrieben, wobei das Sicherheitsventil 17 einen maximalen Überdruck von beispielsweise 4 bar zuläßt. Der Förderstrom der Pumpe sollte dabei etwa maximal 150 l/h betragen. Durch Anpassung und Regelung der Motordrehzahl des Spaltrohrmotors 21 kann die Förderleistung der Zahnradpumpe 9 auf die Gegebenheiten angepaßt werden. Insbesondere ist es möglich, mit einer Pumpeneinheit verschieden große Solaranlagen zu betreiben. Die Vorhaltung verschiedener Pumpentypen reduziert sich daher vorteilhaft.

Die Pumpe wird von dem Spaltrohrmotor 21, der an die Antriebsachse 95 der Zahnradpumpe 9 angeflanscht ist, direkt angetrieben. Die Zahnräder 93 und 94 sind schrägverzahnt, um einen möglichst gleichmäßigen, d. h. nicht pulsierenden, Förderstrom zu erzeugen. Da der erreichbare Förderdruck und die Steilheit der Kennlinie der Pumpe bei Zahnradpumpen u. a. von den Spaltspielen abhängt, werden diese so gewählt, daß eine relativ flache Kennlinie unter Beibehaltung des geforderten Förderdrucks entsteht. Damit wird zwar ein etwas schlechterer volumetrischer Wirkungsgrad erzielt, dennoch überwiegen die Vorteile für einen universellen Einsatz der Pumpe.

Bei fehlender Sonneneinstrahlung wird die Zahnradpumpe 9 abgeschaltet und somit die Zirkulation unterbrochen. Aufgrund der Sperrwirkung der verwendeten Zahnradpumpe bei Stillstand ist eine Rückzirkulation des Wärmeträgermediums nicht möglich. Die Zahnradpumpe 9 verhindert jede Flüssigkeitsbewegung. Damit sind Schwerkraftfallen bzw. Rückschlagventile in den Zirkulationsleitungen entbehrlich.

### Bezugszeichenliste

- 1: Kollektorvorlauf
- 2: Vorlaufthermometer
- 3: Schmutzfang
- 4: Anschlußverschraubung
- 5: Solarwärmetauscher
- 6: Anschlußverschraubung
- 7: Absperrkugelhahn
- 8: Füll- und Entleerhahn
- 9: Zahnradpumpe
- 90: Außenfläche
- 91: Pumpengehäuse
- 92: Pumpendeckel
- 93: Zahnrad
- 94: Zahnrad
- 95: Antriebsachse
- 96: Nebenachse
- 97: Druckanschluß
- 98: Sauganschluß
- 99: Füllanschluß
- 10: Durchflußmesser mit Absperrventil
- 11: Rücklaufthermometer
- 12: Kollektorrücklauf
- 13: Solarkollektor
- 14: Spülhahn
- 15: Manometer
- 16: Entlüftungsventil
- 17: Sicherheitsventil
- 18: Kupplung
- 19: Ausdehnungsgefäß
- 20: Überlauf
- 21: Spaltrohrmotor

## Patentansprüche

1. Solaranlage mit
- einem Solarkreislauf eines Wärmeträgermediums,
- einem Solarkollektor (13) eingebunden in diesen Solarkreislauf,
- einem Wärmetauscher (5) im Solarkreislauf, und
- einer Zirkulationspumpe im Solarkreislauf, die als Zahnradpumpe (9) ausgebildet ist,
**dadurch gekennzeichnet,**
**dass** die Zahnradpumpe (9) eine Förderhöhe von 10 m bis 40 m besitzt und einen Förderstrom von 10 l/h bis 200 l/h liefert.

2. Solaranlage nach Anspruch 1,
**dadurch gekennzeichnet,**
**dass** die Pumpe (9) eine flache Pumpenkennlinie hat.

3. Solaranlage nach Anspruch 1 oder 2,
**dadurch gekennzeichnet,**
**dass** ein Spaltrohrmotor (21) für den Antrieb der Zahnradpumpe (9) vorgesehen ist.

4. Solaranlage nach Anspruch 3,
**dadurch gekennzeichnet,**
**dass** eine Drehzahlregelung für den Spaltrohrmotor (21) vorgesehen ist.

5. Solaranlage nach einem der vorhergehenden Ansprüche,
**dadurch gekennzeichnet,**
**dass** die Pumpe (9) auf der Saugseite neben einem Sauganschluß (98) einen Füllanschluß (99) zum Befüllen der Solaranlage mit dem Wärmeträgermedium aufweist.

6. Solaranlage nach einem der vorhergehenden Ansprüche,
**dadurch gekennzeichnet,**
**dass** die Zahnräder (93, 94) der Pumpe schrägverzähnt sind.

7. Solaranlage nach einem der vorhergehenden Ansprüche,
**dadurch gekennzeichnet,**
**daß** das Pumpengehäuse (91), der Pumpengehäusedeckel (92) und/oder die Zahnräder (93, 94) der Pumpe aus Kunststoff ausgebildet sind.

8. Solaranlage nach einem der vorhergehenden Ansprüche,
**dadurch gekennzeichnet,**
**daß** im Solarkreislauf ein Feinfilter (3) vorgesehen ist.

9. Solaranlage nach einem der vorhergehenden Ansprüche,
**dadurch gekennzeichnet,**
**daß** das Pumpengehäuse (91) eine mehrfach stufig abgesetzte Außenfläche (90) hat.

10. Zahnradpumpe (9), insbesondere für Solaranlagen zur Zirkulation eines Wärmeträgermediums, mit einem Pumpengehäuse (91), in dem zwei Zahnräder (93, 94) ineinandergreifend drehbar gelagert sind, und einem Pumpengehäusedeckel (92),
**dadurch gekennzeichnet,**
**daß** die Pumpe (9) eine flache Pumpenkennlinie hat.

11. Zahnradpumpe nach Anspruch 10,
**dadurch gekennzeichnet,**
**daß** das Pumpengehäuse (91) eine mehrfach stufig abgesetzte Außenfläche (90) hat.

12. Zahnradpumpe nach Anspruch 10 oder 11,
**dadurch gekennzeichnet,**
**daß** die Zahnräder (93, 94) schrägverzahnt sind.

13. Zahnradpumpe nach Anspruch 10, 11 oder 12,
**dadurch gekennzeichnet,**
**daß** das Pumpengehäuse (91), der Pumpengehäusedeckel (92) und/oder die Zahnräder (93, 94) aus Kunststoff ausgebildet sind.

## Claims

1. Solar installation with
- a solar circuit of a heat carrier medium,
- a solar collector (13) integrated into said solar circuit,
- a heat exchanger (5) in the solar circuit, and
- a circulating pump, which is formed as a gear pump (9), in the solar circuit,
**characterised in**
**that** the gear pump (9) has a delivery head of 10 m to 40 m and a delivery rate of 10 l/h to 200 l/h.

2. Solar installation according to Claim 1,
**characterised in**
**that** the pump (9) has a flat pump characteristic.

3. Solar installation according to Claim 1 or 2,
**characterised in**
**that** a canned motor (21) is provided to drive the gear pump (9).

4. Solar installation according to Claim 3,
**characterised in**
**that** speed regulation is provided for the canned motor (21).

5. Solar installation according to any one of the preceding Claims,
**characterised in**
**that** the pump (9) has on the intake side a filling connection (99), in addition to an intake connection (98), for filling the solar installation with the heat carrier medium.

6. Solar installation according to any one of the preceding Claims,
**characterised in**
**that** the gear-wheels (93, 94) of the pump are helically toothed.

7. Solar installation according to any one of the preceding Claims,
**characterised in**
**that** the pump casing (91), the pump casing cover (92) and/or the gear-wheels (93, 94) of the pump are formed from a plastics material.

8. Solar installation according to any one of the preceding Claims,
**characterised in**
**that** a fine filter (3) is provided in the solar circuit.

9. Solar installation according to any one of the preceding Claims,
**characterised in**
**that** the pump casing (91) has a multi-stepped outer surface (90).

10. Gear pump (9), in particular for solar installations for circulating a heat carrier medium, with a pump casing (91), in which two gear-wheels (93, 94) are rotatably mounted in meshing fashion, and a pump casing cover (92),
**characterised in**
**that** the pump (9) has a flat pump characteristic.

11. Gear pump according to Claim 10,
**characterised in**
**that** the pump casing (91) has a multi-stepped outer surface (90).

12. Gear pump according to Claim 10 or 11,
**characterised in**
**that** the gear-wheels (93, 94) are helically toothed.

13. Gear pump according to Claim 10, 11 or 12,
**characterised in**
**that** the pump casing (91), the pump casing cover (92) and/or the gear-wheels (93, 94) of the pump are formed from a plastics material.

## Revendications

1. Installation solaire avec
- un circuit solaire d'un fluide caloporteur,
- un collecteur solaire (13) intégré dans ce circuit solaire,
- un échangeur de chaleur (5) dans le circuit solaire, et
- une pompe de circulation dans le circuit solaire qui est conçue comme une pompe à engrenages (9),
**caractérisée en ce que**
la pompe à engrenages (9) a une hauteur de refoulement comprise entre 10 m et 40 m et fournit un débit de refoulement compris entre 10 l/h et 200 l/h.

2. Installation solaire selon la revendication 1, **caractérisée en ce que** la pompe (9) a une courbe caractéristique de pompe plate.

3. Installation solaire selon la revendication 1 ou 2, **caractérisée en ce qu'**un moteur à gaine (21) est prévu pour l'entraînement de la pompe à engrenages (9).

4. Installation solaire selon la revendication 3, **caractérisée en ce qu'**une régulation de vitesse de rotation est prévue pour le moteur à gaine (21).

5. Installation solaire selon l'une quelconque des revendications précédentes, **caractérisée en ce que** la pompe (9) comporte, du côté aspiration près d'un raccordement d'aspiration (98), un raccordement de remplissage (99) pour le remplissage de l'installation solaire avec le fluide caloporteur.

6. Installation solaire selon l'une quelconque des revendications précédentes, **caractérisée en ce que** les engrenages (93,94) de la pompe ont une denture hélicoïdale.

7. Installation solaire selon l'une quelconque des revendications précédentes, **caractérisée en ce que** le carter de pompe (91), le couvercle du carter de pompe (92) et/ou les engrenages (93,94) sont faits en matière plastique.

8. Installation solaire selon l'une quelconque des revendications précédentes, **caractérisée en ce qu'**un filtre fin (3) est prévu dans le circuit solaire.

9. Installation solaire selon l'une quelconque des revendications précédentes, **caractérisée en ce que** le carter de pompe (91) a une surface extérieure décrochée sur plusieurs étages (90).

10. Pompe à engrenages (9), en particulier pour des installations solaires pour la circulation d'un fluide caloporteur, avec un carter de pompe (91), dans lequel deux engrenages sont logés de manière à tourner en prise l'un avec l'autre, et un couvercle de carter de pompe (92), **caractérisée en ce que** la pompe (9) a une courbe caractéristique de pompe plate.

11. Pompe à engrenages selon la revendication 10, caractérisée en que le carter de pompe (91) a une surface extérieure décrochée sur plusieurs étages (90).

12. Pompe à engrenages selon la revendication 10 ou 11, **caractérisée en ce que** les engrenages (93,94) ont une denture hélicoïdale.

13. Pompe à engrenages selon la revendication 10, 11 ou 12, **caractérisée en ce que** le carter de pompe (91), le couvercle du carter de pompe (92) et/ou les engrenages (93,94) sont faits en matière plastique.
